# EUROPEAN PATENT SPECIFICATION

(11) **EP 4 337 397 B1**
(45) Date of publication and mention of the grant of the patent: **10.12.2025**
(21) Application number: 22728274.6
(22) Date of filing: 10.05.2022
(51) Int. Cl.: B21D 7/12, B21D 7/14, G01B 11/00, G01B 11/25, B21D 7/02

(54) **AUTOMATED PLANT FOR BENDING/CURVATURE OF ELEMENTS WITH SUBSTANTIALLY LONGITUDINAL DEVELOPMENT AND BENDING/CURVATURE METHOD IMPLEMENTED BY SAID PLANT.**
AUTOMATISIERTE ANLAGE ZUR BIEGUNG/KRÜMMUNG VON ELEMENTEN MIT IM WESENTLICHEN LÄNGLICHER ENTWICKLUNG SOWIE VERFAHREN ZUR DURCHFÜHRUNG DER BIEGUNG/KRÜMMUNG MITTELS DIESER ANLAGE.
INSTALLATION AUTOMATIQUE POUR LE CINTRAGE/COURBURE D'ÉLÉMENTS À DÉVELOPPEMENT SENSIBLEMENT LONGITUDINAL ET PROCÉDÉ DE CINTRAGE/COURBURE AU MOYEN DE LADITE INSTALLATION.

(30) Priority: 11.05.2021 IT 202100012044
(43) Date of publication of application: 20.03.2024
(73) Proprietor: Techmetal S.r.l., 36015 Schio (VI) (IT)
(72) Inventor: BERLATO, Giuseppe, 36014 Santorso (VI) (IT); BERLATO, Marco, 36014 Santorso (VI) (IT)
(74) Representative: Marchioro, Paolo
(86) International application number: PCT/IB2022/054333
(87) International publication number: WO 2022/238895

(56) References cited:
- CN-A- 109 051 768
- CN-B- 107 008 786
- DE-A1- 10 331 127
- DE-A1- 102007 008 485
- US-A- 4 732 025
- US-A- 6 029 333
- US-A1- 2017 333 968
- US-A1- 2018 318 899
- US-A1- 2021 101 198

## Description

The invention relates to an automated plant for the bending/curvature of elements with substantially longitudinal development, in preparation for subsequent steps for processing the same longitudinal element.

The invention also relates to a method for the bending/curvature of elements with substantially longitudinal development, performed by means of the aforesaid automated plant of the invention.

It is known that in various industrial sectors, such as the sectors related to automatic machinery for packaging food or pharmaceutical products, or, in general, in applications and related machinery requiring high precision, specific and precise tubular ducts or specific and precise solid elements with substantially longitudinal development, suitably shaped according to the operational need, are required.

It is also known that the current devices for bending these elements with substantially longitudinal development, combined with pre-processing systems, e.g. cutting, drilling or trimming processings, of the same longitudinal elements in preparation for subsequent processing steps, such as welding, are optimised for series processings, and do not allow to guarantee the aforesaid high quality of the bendings in view of the subsequent welding steps.

In particular, such devices are, disadvantageously, not suitable for the production of small batches or even of single parts, which require high processing precision both in terms of tolerances in the position of the cuts (holes, slots, etc.) and in preparation for the welding operation.

In fact, at present, in order to bend and prepare single longitudinal elements, or at least elements in small number, for a subsequent welding step, these bending and cutting operations are carried out manually by highly experienced specialised operators.

In particular, the skilled operator, following the bending operation performed by means of a tube bending device, according to determined instructions, picks up the same bent longitudinal element and checks its dimensions by assessing the conformity of the piece with respect to the technical drawing, manually making any necessary corrections (bending angles). Subsequently, the operator, again manually, carries out the preparation of the bent longitudinal element, making the holes, the slots or the couplings by means of appropriate equipment, such as drills and milling cutters, and finally checks the final result in view of the welding operation.

It is clear from this exposure that, disadvantageously, the possibility of errors in the execution of such manual processings is high.

In particular, it is known that the precision and the quality of the aforesaid bending and cutting operations consequently lead to a simplification of the subsequent welding steps, in order to guarantee a high quality of the final joint, limiting the heat input and both the superficial and internal defects of the bead itself.

US 4 732 025 A discloses an apparatus and method for precisely bending an elongated tube having opposed leading and trailing ends into a specified bent configuration, said apparatus comprising: a preprogrammed bender comprising means for gripping the trailing end of the tube and moving said tube axially and rotationally preprogrammed amounts, and die means for sequentially bending said tube preprogrammed amounts to form a plurality of bends in said tube; positioning sensing means for sensing the spatial position of at least one predetermined location between the leading end of the tube and one said bend, said position sensing means being operative to move to preprogrammed locations after the formation of each bend by the bender; and control means for altering the preprogrammed bending operations of the bender in response to the spatial positions of said tube sensed by said position sensing means such that the bender bends the tube precisely into the specified configuration.

The present invention intends to overcome the limitations and the drawbacks indicated for the bending and eventually cutting plants and methods of known type.

In particular, it is an object of the present invention to realize an automated bending plant that allows to implement at least the bending and quality check steps of the carried out processing automatically, and therefore without human intervention.

A further object of the invention is the realization of an automated bending plant of a flexible type, which therefore allows the automated implementation of at least the steps of bending and check of the quality of such bending, even of a small number of longitudinal elements, including of only one longitudinal element.

In particular, it is the object of the invention to define a bending plant that does not require to be set up with structural elements made ad-hoc for the processing of longitudinal elements with specific shapes, such as for example the jigs that are necessarily used in the automated plants of known type.

Advantageously, the automated plant of the invention, according to a preferred embodiment, not only performs the operations of bending and quality check of such bending in an automated manner, but also allows the cutting/drilling operations to be performed at the same time as and concurrently with the aforesaid bending operations.

The aforesaid objects are achieved with the realization of an automated bending/curvature plant, in accordance with the independent claim 1.

The above-mentioned objects are also achieved with the realization of a bending/curvature method, in accordance with claim 11.

Further features of the plant and method are described in the dependent claims.

The aforesaid purposes, together with the advantages that will be mentioned farther on, will be readily apparent during the description of some preferred embodiments of the invention, which are given by way of non-limiting indication with reference to the accompanying drawings, where:
- Fig. 1 depicts an axonometric view of a first embodiment of the plant of the invention in schematic form;
- Fig. 2 depicts a top view of the plant of the invention of Fig. 1 in schematic form;
- Fig. 3 depicts the robotic arm of the plant of Fig. 1 in an isolated manner;
- Fig. 4 depicts an axonometric view of a second embodiment of the plant of the invention in schematic form;
- Fig. 5 depicts a detail of Fig. 4;
- Fig. 6 depicts a top view of the plant of the invention of Fig. 4 in schematic form.

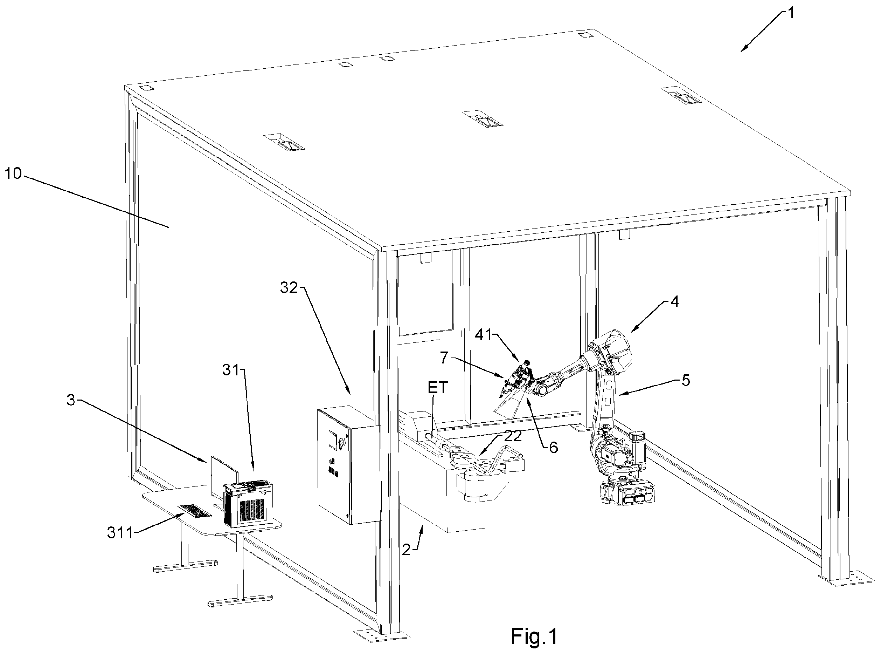

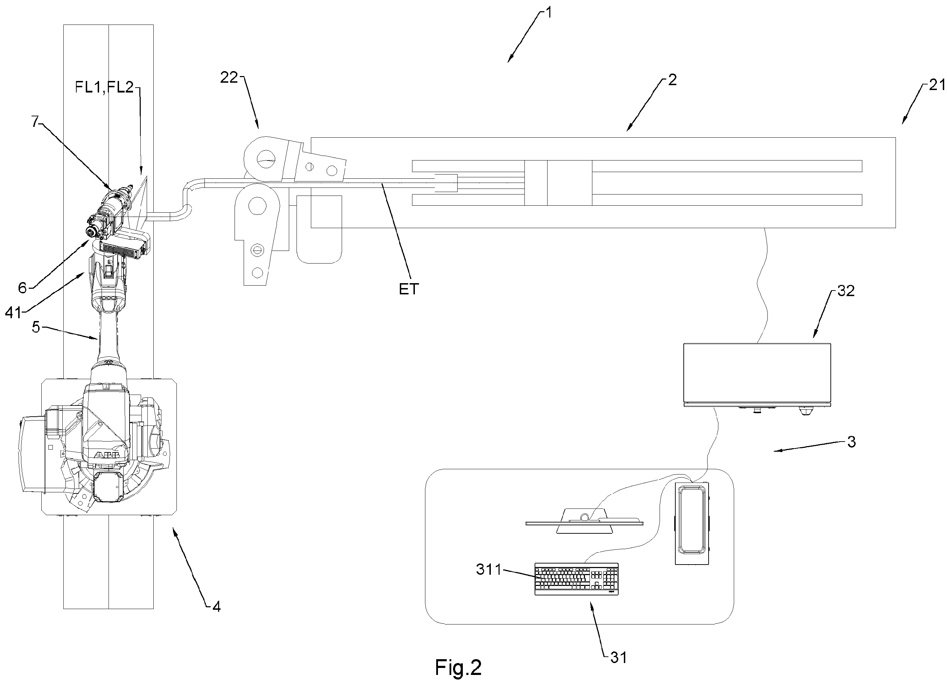

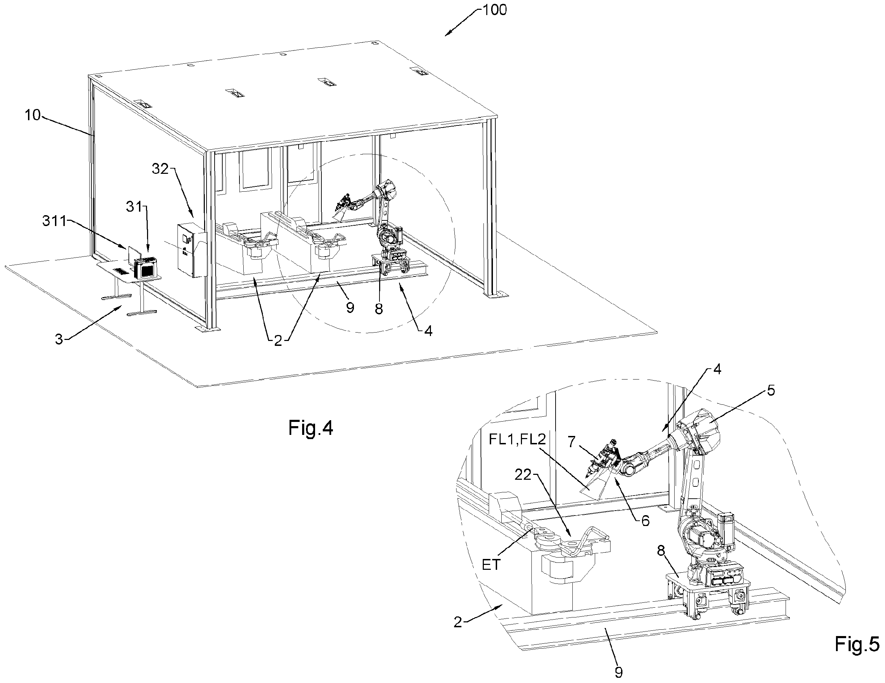

The automated plant for the bending/curvature of elements with substantially longitudinal development of the invention is depicted as a whole, in a first preferred embodiment, in Figs. 1 and 2, wherein it is indicated overall by **1,** and in a second preferred embodiment, in Figs. 4 to 6, wherein it is indicated overall by **100.**

In the present context, the term "longitudinal element", hereafter referred to as **ET,** means any longitudinal element of tubular or solid type, both of which may have a circular, elliptical or polygonal cross-section.

Furthermore, usually such longitudinal elements **ET,** in order to be able to be treated with the automated plant **1** and **100** of the invention, are longitudinal elements **ET** made of metallic material, such as steel alloys, including carbon steel, aluminium alloys, copper alloys, etc.

It is not excluded, however, that such plant **1** and **100** of the invention can also be used to process longitudinal elements **ET** made of materials other than metal, provided they can be suitably bent/curved.

Furthermore, in technical jargon, the terms "bending" and "curvature" are used to identify processings on substantially identical longitudinal elements. For this reason, in this context it was decided to use exclusively, unless otherwise indicated, the term "bending", also implying the concept of "curvature". According to the first preferred embodiment of the invention, as depicted in Fig. 1, the automated plant **1** of the invention comprises an automated tube bending device **2,** configured to perform, through the control by an electronic control unit **3,** the bending of a longitudinal element **ET.**

In particular, as can be seen in Fig. 2, a first door **22** is identified in such an automated tube bending device **2** and from which the longitudinal element **ET** is placed at the outlet, at least partially bent, by the automated tube bending device **2.**

The automated tube bending device **2** is preferably, but not necessarily, also provided with a second door **21** at the opposite end of the first door **22.**

With regard to the electronic control unit **3,** it is configured to allow the loading of a CAD digital file comprising the data relating to a digital model **MD1,** usually three-dimensional, of the bent longitudinal element **ETP** that is intended to be obtained by means of the automated plant **1** of the invention.

It cannot be ruled out that, as an alternative, such an electronic control unit **3** may allow the direct realization of a CAD digital file relating to the digital model **MD1** of the bent longitudinal element **ETP.** For this reason, in this context, the term "loading" is to be understood as both the actual loading of a remotely realized CAD digital file into said electronic control unit **3** and the realization of the CAD digital file of the digital model **MD1** directly on the same electronic control unit **3.**

Further, the electronic control unit **3** is configured to process the aforesaid CAD digital file and, as mentioned above, to control the functionality of the automated tube bending device **2,** so as to bend the inserted longitudinal element **ET,** preferably at the first door **22,** based on the aforesaid digital model **MD1** of the same already bent longitudinal element **ETP.**

It is not excluded that, according to an embodiment variant, this longitudinal element **ET** may be inserted into the automated tube bending device **2,** at the second door **21.**

According to the preferred embodiment of the invention, in particular, said electronic control unit **3** comprises a computer **31,** comprising in turn a console **311,** by means of which an operator is able to load the aforesaid CAD digital file. The computer **31** is configured, by means of appropriate computer products executed by it, to process and handle said CAD digital file in the manner described in detail below. Furthermore, said electronic control unit **3** is provided with a PLC (Programmable Logic Controller) **32,** operatively connected to the aforesaid computer **31** and to the automated tube bending device **2,** so as to be able to receive, from said computer **31,** the data relating to the digital model **MD1** of the bent longitudinal element **ETP** and, on the basis of said data, to appropriately control the functionality of the automated tube bending device **2,** in order to bend the longitudinal element **ET** inserted in the latter, according to the loaded digital model **MD1.**

It is not excluded, however, that according to alternative embodiments of the invention the electronic control unit **3** may comprise different components, provided that the latter are able to perform the functionalities described above, as well as the additional functionalities that will be described later.

According to the invention, the automated plant **1** of the invention also comprises a robotic arm **4** arranged downstream of the automated tube bending device **2** and configured to be moved, by the aforesaid electronic control unit **3,** near the first door **22** of the same automated tube bending device **2.**

To this end, therefore, according to the preferred embodiment, the aforesaid robotic arm **4** is also operatively connected to the PLC **32** belonging to the electronic control unit **3.**

According to the preferred embodiment of the invention, the aforesaid robotic arm **4** is an anthropomorphic robot **5.**

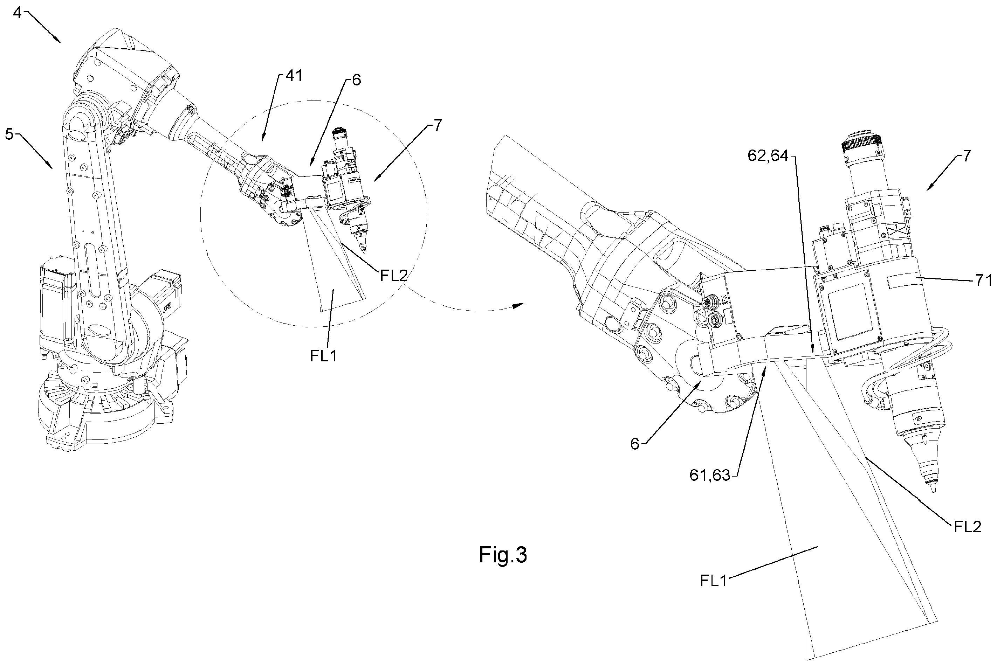

It is not excluded, however, that according to alternative embodiments of the invention such a robotic arm **4** may be realized with different technologies. According to the invention, said robotic arm **4,** as visible in Fig. 3, has, connected at its movable end **41,** an optical measuring system **6** configured to scan, during the execution of the bending of the longitudinal element **ET** by the automated tube bending device **2,** at least one portion of the same longitudinal element **ET,** at the first door **22.**

In other words, the electronic control unit **3** is configured, during the bending operation of the longitudinal element **ET,** to move the robotic arm **4** and the optical measuring system **6,** immediately downstream of the first door **22** of the automated tube bending device **2,** so as to follow the profile of the same longitudinal element **ET,** at least partially bent, in that position, based on the pre-loaded digital model **MD1** of the same bent longitudinal element **ETP.** The optical measuring system **6,** during such movement is configured to scan the portion of the same longitudinal element **ET,** at least partially bent, as it exits this automated tube bending device **2.**

Still preferably, such movement of the robotic arm **4** and such scanning operation by the optical measuring system **6** are implemented following each single bending operation performed on the longitudinal element **ET.**

Advantageously, this mode of operation allows performing the various scanning operations of the various portions of the longitudinal element **ET** immediately downstream of the first door **22,** where the scanned portion is held stably in place by the same automated tube bending device **2.** This advantageously allows such scanning to be carried out in a highly precise manner, without therefore possible oscillations of the same portion of the longitudinal element **ET,** with respect to the optical measuring system **6.**

It is not excluded, however, that according to different embodiments of the invention the scanning operation is performed only after all bending operations on the longitudinal element **ET** have been executed.

Returning to the optical measuring system **6,** it is configured, once the scanning operation of each portion has been carried out, to generate a digital model **MD2** of such scanned portion and to send the data relating to that digital model **MD2** to the electronic control unit **3.**

Preferably, the measuring optical system **6** is a three-dimensional scanning optical system configured to acquire a three-dimensional model of each of the portions of the scanned longitudinal element **ET** and to calculate the angles of curvature of the aforesaid bent portions.

Even more preferably, the three-dimensional scanning optical system comprises two laser sources **61** and **62,** configured to generate two laminar beams **FL1** and **FL2** of coherent light that are incident on each other at an angle of incidence between 15° and 45°, preferably at an angle of incidence of 30°. Furthermore, said three-dimensional scanning optical system comprises, associated with each of the aforesaid laser sources **61** and **62,** a photosensitive sensor **63** and **64,** configured to receive the light emitted by the respective laser source **61** and **62** and reflected by the scanned portion of the longitudinal element **ET.**

It is not excluded, however, that according to alternative embodiments of the invention, such an optical measuring system **6** may comprise a single laser source and a single photosensitive sensor, or that it may comprise more than two laser sources, each associated with a relative photosensitive sensor.

Further, it is not excluded that according to different embodiments of the invention the optical measuring system **6** may comprise, instead of the laser sources and of the relative sensors, a vision system comprising one or more matrix or linear cameras.

With regard, again, to the electronic control unit **3,** it is, according to the invention, configured, as mentioned above, to perform, during each bending operation by the automated tube bending device **2,** the positioning of the robotic arm **4** at the first door **22,** based on the pre-loaded digital model **MD1,** and to acquire the data relating to the digital model **MD2** of each portion scanned by the optical measuring system **6.** In addition, the electronic control unit **3** is also configured to perform the comparison between the digital model **MD2** of each scanned portion with the corresponding portion of the preloaded digital model **MD1** of the bent longitudinal element **ETP** to be obtained, in order to check the conformity or the non-conformity between such models.

Preferably, such a comparison consists of at least checking the correspondence, subject to appropriate predetermined tolerances, of the bending angles calculated for the two digital models.

Further, according to the preferred embodiment of the invention, said electronic control unit **3** is configured, following said comparison, in case a non-conformity is found, to modify the control parameters of the automated tube bending device **2,** so as to correct said non-conformity.

It is not excluded that, according to an embodiment variant of the invention, the electronic control unit **3** is not configured to automatically correct these control parameters of the automated tube bending device **2,** but that it is configured exclusively to generate, in the event of a non-conformity, an alarm signal, perceptible by an operator. In this case, therefore, an operator, following such an alarm signal, has the opportunity to intervene manually on the plant to correct the non-conformity.

According to the aforesaid first preferred embodiment of the plant **1** of the invention, arranged downstream of the automated tube bending device **2,** on the movable end **41** of the robotic arm **4,** there is also provided a cutting apparatus **7** configured to perform the cutting and/or the drilling of the longitudinal element **ET.** Therefore, in this case, the electronic control unit **3** is also configured to control, during the single bending operations, the aforesaid cutting apparatus **7,** based on the preloaded digital model **MD1** of the bent longitudinal element **ETP** to be obtained. To this end, therefore, this digital model must also comprise, where applicable, the data relating to any cuts, drillings, trimmings, etc., with which the bent longitudinal element **ETP** must be provided, in order to carry out the subsequent welding steps.

Preferably but not necessarily, such cutting apparatus **7** comprises a laser cutting torch **71.**

According to this preferred embodiment, therefore, the digital model **MD2** of each scanned portion of the at least partially bent longitudinal element, obtained with the optical measuring system **6,** will also comprise the data relating to such cuts, drillings, trimmings, performed on the same portion.

In this way, therefore, the electronic control unit **3,** during the aforesaid comparison operation, in addition to comparing the bending angles, is further configured to check the conformity or the non-conformity of cuts, drillings, trimmings that may have been made, with respect to those envisaged in the preloaded digital model **MD1** of the bent longitudinal element **ETP** to be obtained.

The plant **1** of the invention, preferably but not necessarily, could also be provided with a containment and protection structure **10** within which at least the automated tube bending device **2** and the robotic arm **4** are arranged. Advantageously, the presence of such a containment and protection structure **10** guarantees the safety of operators working outside the plant.

In particular, access to the inside of the containment and protection structure **10** could only be allowed during the preparation steps when the plant is at a standstill.

In addition, suitable shieldings to direct and reflected laser beams could be provided at the walls of the aforesaid containment and protection structure **10.** As mentioned above, a second embodiment of the plant of the invention is depicted in Figs. 4 to 6, where this plant is indicated as a whole with reference **100.**

This second embodiment provides all the features described so far for the first preferred embodiment of the plant **1,** including any variants.

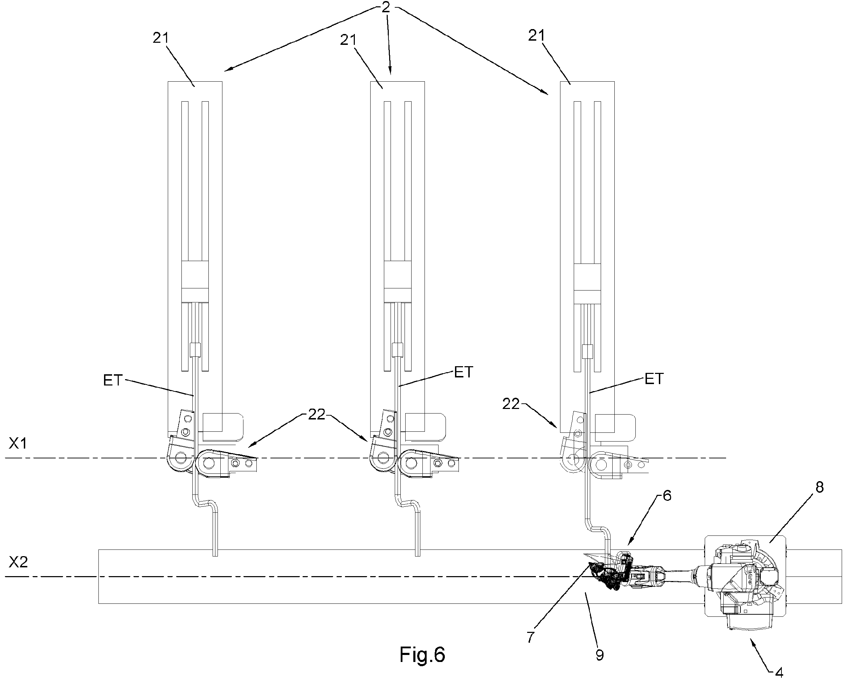

The differences of the plant **100** according to the second embodiment described herein, with respect to the aforesaid first embodiment, consist in the fact that the same plant **100** comprises a plurality of automated tube bending devices **2,** arranged side by side and having their first doors **22** aligned along a first predefined trajectory **X1,** as schematically presented in Fig. 6.

Furthermore, the robotic arm **4** is configured to be moved along a second trajectory **X2,** substantially parallel to the first trajectory **X1,** so that the movable end **41** of the same robotic arm **4** can be selectively positioned at each of the first doors **22** of each of the automated tube bending devices **2.** This advantageously allows, therefore, the positioning of the optical measuring system **6** and, if necessary, the cutting apparatus **7** immediately downstream of each first door **22** of each automated tube bending device **2,** in order to scan, and, if necessary, selectively perform cuts, drillings and trimmings of each longitudinal element **ET** loaded and processed on one of the automated tube bending devices **2.**

In particular, preferably, but not necessarily, according to the aforesaid second preferred embodiment of the invention, the robotic arm **4** is installed on a carriage **8,** configured to be moved automatically by the electronic control unit **3** along a slide **9,** arranged in turn along said second trajectory **X2.**

It is not excluded, however, that such a movement of the robotic arm **4** can be implemented in an alternative manner, provided that the movable end **41** of the same arm **4** can be positioned, selectively, at each of the first doors **22** of the automated tube bending devices **2** belonging to the plant **100** of the invention. As regards the electronic control unit **3** of the plant **100** according to the aforesaid second preferred embodiment, it is a single electronic control unit **3,** like in the case of the first preferred embodiment, but capable of individually controlling the functionality of all the automated tube bending devices **2** and of the robotic arm **4** belonging to the plant **100.**

Advantageously, the aforesaid configuration of the plant **100** allows performing multiple bendings and selectively performing measurements and possibly the execution of cuts, drillings and/or trimmings by means of the robotic arm **4.**

In other words, this configuration advantageously allows to reduce the processing times of several longitudinal elements **ET** and to exploit a single robotic arm **4** in combination with several automated tube bending devices **2.** As mentioned above, the method for the bending/curvature of a longitudinal element **ET** by means of a plant **1** and **100** according to any one of the two preferred embodiments of the invention, including variants, is also part of the invention.

In particular, this method envisages performing the following operations:
a) uploading a CAD digital file, comprising the data relating to a digital model **MD1** of the bent longitudinal element **ETP** to be obtained, into the electronic control unit **3** of the plant **1** and **100;**
b) performing a bending of the longitudinal element **ET** loaded in the automated tube bending device **2** of the plant **1** and **100;**
c) positioning the robotic arm **4** of the plant **1** and **100** near the first door **22** of the automated tube bending device **2;**
d) scanning, by means of the optical measuring system **6** present in the movable end **41** of the robotic arm **4,** the bent portion of the longitudinal element **ET** arranged at the first door **22;**
e) generating a digital model **MD2** of said scanned portion;
f) acquiring, by the electronic control unit **3** the digital model **MD2** of the scanned portion;
g) comparing the digital model **MD2** of the scanned portion with the digital model **MD1** of the bent longitudinal element **ETP** to be obtained, in order to check the conformity or the non-conformity between the models;
h) in the event of a non-conformity, modifying the control parameters of the automated tube bending device **2** so as to correct the non-conformity and/or to generate an alarm signal relating to the non-conformity;
i) repeating operations b) to h) for each of the bendings to be made on the longitudinal element **ET.**

The method of the invention also provides for a further operation g2) performed prior or subsequent to operation g), wherein said operation g2) provides for performing any cuts, drillings, trimmings on the longitudinal element **ET,** based on the digital model **MD1** of the bent longitudinal element **ETP** to be obtained.

Based on the foregoing, therefore, the plant of the invention and the method of the invention achieve all the predetermined purposes.

In particular, the object to realize an automated bending plant that allows to implement at least the bending and quality check steps of the carried out processing automatically, and therefore without human intervention, has been achieved.

A further object that has been achieved is the realization of an automated bending plant of a flexible type, which therefore allows the automated implementation of at least the steps of bending and check of the quality of such bending, even of a small number of longitudinal elements, including of only one longitudinal element.

In particular, the object to define a bending plant that does not require to be set up with structural elements made ad-hoc for the definition of longitudinal elements with specific shapes, such as for example the jigs that are necessarily used in the automated plant of known type has been achieved. Advantageously, the automated plant is not only able to perform the operations of bending and of quality check of such bending in an automated manner, but also allows the cutting/drilling operation to be performed at the same time as and concurrently with the aforesaid bending operation.

## Claims

1. Plant (1, 100) for the bending/curvature of elements with substantially longitudinal development (ET), of the type comprising:
- at least one automated tube bending device (2), configured to perform, by means of the control by an electronic control unit (3), the bending of a longitudinal element (ET), said automated tube bending device (2) being provided with a first outlet door (22) of said at least partially bent longitudinal element (ET);
- said electronic control unit (3), configured to permit loading a CAD digital file comprising the data relating to a digital model (MD1) of said bent longitudinal element (ETP) to be obtained, said electronic control unit (3) being further configured to process said CAD digital file and to control said automated tube bending device (2), so as to bend said longitudinal element (ET) based on said digital model (MD1) of said bent longitudinal element (ETP);
**wherein** it comprises, arranged downstream of said automated tube bending device (2):
- a cutting apparatus (7) configured for cutting and/or drilling said longitudinal element (ET);
- at least one robotic arm (4) arranged downstream of said automated tube bending device (2) and configured to be moved near said first door (22) of said automated tube bending device (2), said robotic arm (4) having at its movable end (41) an optical measuring system (6) configured, during said bending operation, to scan at least one portion of said longitudinal element (ET), at least partially bent, at said first door (22) and to generate a digital model (MD2) of said at least one scanned portion, said electronic control unit (3) being configured to:
- perform, during said bending operation by said automated tube bending device (2), the positioning of said robotic arm (4) at said first door (22), based on said digital model (MD1) of said bent longitudinal element (ETP) to be obtained;
- acquire said digital model (MD2) of said at least one scanned portion, generated by said optical measuring system (6);
- compare said digital model (MD2) of said at least one scanned portion with said digital model (MD1) of said bent longitudinal element (ETP) to be obtained, in order to check the conformity or the non-conformity between said models;
- in the event of a non-conformity, modify the control parameters of said automated tube bending device (2) so as to correct said non-conformity and/or to generate an alarm signal relating to said non-conformity;
- control, during said bending operation by said automated tube bending device (2), said cutting apparatus (7), based on said digital model (MD1) of said bent longitudinal element (ETP) to be obtained;
and wherein said cutting apparatus (7) is associated at said movable end (41) of said robotic arm (4).

2. Plant (1, 100) according to claim 1, **characterized in that** said cutting apparatus (7) comprises a laser cutting torch (71).

3. Plant (1, 100) according to any one of the preceding claims, **characterized in that** said element with longitudinal development (ET) is a tubular longitudinal element or a solid longitudinal element with circular, elliptical or polygonal cross-section.

4. Plant (1, 100) according to any one of the preceding claims, **characterized in that** said optical measuring system (6) is a three-dimensional scanning optical system.

5. Plant (1, 100) according to claim 4, **characterized in that** said three-dimensional scanning optical system comprises:
- at least one laser source (61, 62) configured to generate a laminar beam (FL1, FL2) of coherent light;
- a photosensitive sensor (63, 64) configured to receive the light reflected by said longitudinal element (ET).

6. Plant (1, 100) according to claim 5, **characterized in that** said three-dimensional scanning optical system comprises:
- two laser sources (61, 62) configured to generate two laminar beams (FL1, FL2) of coherent light that are incident on each other at an angle of incidence between 15° and 45°.

7. Plant (1, 100) according to any one of the preceding claims, **characterized in that** said electronic control unit (3) is configured to perform said operations of positioning said robotic arm (4), of acquiring said digital model (MD2) of said at least one scanned portion, of comparing said digital model (MD2) of said at least one scanned portion with said digital model (MD1) of said bent longitudinal element (ETP) to be obtained, and of modifying said control parameters in case of non-conformity, following each bending operation by said automated tube bending device (2).

8. Plant (100) according to any one of the preceding claims, **characterized in that** it comprises a plurality of said automated tube bending devices (2), arranged side by side and having their first doors (22) aligned along a predefined first trajectory (X1), said robotic arm (4) being configured to be moved along a second trajectory (X2) substantially parallel to said first trajectory (X1), so that said movable end (41) of said robotic arm (4) can be selectively positioned at one of said first doors (22) of one of said automated tube bending devices (2), and so that said optical measuring system (6) can scan at least one portion of said at least partially bent longitudinal element (ET) at said first door (22).

9. Plant (1, 100) according to any one of the preceding claims, **characterized in that** said digital model (MD1) of said bent longitudinal element (ETP) to be obtained is a three-dimensional digital model.

10. Plant (1, 100) according to any one of the preceding claims, **characterized in that** said robotic arm (4) is an anthropomorphic robot (5).

11. Method for the bending/curvature of a longitudinal element (ET) by means of a plant (1, 100) according to any one of the preceding claims, said method performing the following operations:
a) uploading a CAD digital file, comprising the data relating to a digital model (MD1) of said bent longitudinal element (ETP) to be obtained, into the electronic control unit (3) of said plant (1, 100);
b) performing a bending of the longitudinal element (ET) loaded in the automated tube bending device (2) of said plant (1, 100);
c) positioning the robotic arm (4) of said plant (1, 100) near the first door (22) of said automated tube bending device (2);
d) scanning, by the optical measuring system (6) present in the movable end (41) of said robotic arm (4), of the bent portion of said longitudinal element (ET) arranged at said first door (22);
e) generation of a digital model (MD2) of said at least one scanned portion;
f) acquisition, by said electronic control unit (3) of said digital model (MD2), of said at least one scanned portion;
g) comparison of said digital model (MD2) of said at least one scanned portion with said digital model (MD1) of said bent longitudinal element (ETP) to be obtained, in order to check the conformity or the non-conformity between said models;
h) in the event of a non-conformity, modification of the control parameters of said automated tube bending device (2) so as to correct said non-conformity and/or generation of an alarm signal relating to said non-conform ity;
i) repeating steps b) to h) for each of the bendings to be made on said longitudinal element (ET),
and wherein the method comprises performing an operation g2) performed prior or subsequent to operation g), said operation g2) providing for performing any cuts and/or drillings on said longitudinal element (ET), based on said digital model (MD1) of said bent longitudinal element (ETP) to be obtained.

## Patentansprüche

1. Anlage (1, 100) für die Biegung/Krümmung von Elementen mit im Wesentlichen länglicher Entwicklung (ET), vom Typ, der Folgendes umfasst:
- mindestens eine automatisierte Rohrbiegevorrichtung (2), die dazu konfiguriert ist, mittels der Steuerung durch eine elektronische Steuereinheit (3) die Biegung eines Längselements (ET) auszuführen, wobei die besagte automatisierte Rohrbiegevorrichtung (2) mit einer ersten Ausgangstür (22) des besagten mindestens teilweise gebogenen Längselements (ET) versehen ist;
- die besagte elektronische Steuereinheit (3), die konfiguriert ist, um das Laden einer digitalen CAD-Datei zu ermöglichen, die die Daten in Bezug auf ein digitales Modell (MD1) des besagten gebogenen Längselements (ETP), das erhalten werden soll, umfasst, wobei die besagte elektronische Steuereinheit (3) ferner konfiguriert ist, um die besagte digitale CAD-Datei zu verarbeiten und die besagte automatisierte Rohrbiegevorrichtung (2) zu steuern, sodass das besagte Längselement (ET) auf der Basis des besagten digitalen Modells (MD1) des besagten gebogenen Längselements (ETP) gebogen wird;
**wobei** sie folgende Elemente umfasst, die nachgeschaltet von der besagten automatisierten Rohrbiegevorrichtung (2) angeordnet sind:
- eine Schneidvorrichtung (7), die zum Schneiden und/oder Bohren des besagten Längselements (ET) konfiguriert ist;
- mindestens einen Roboterarm (4), der nachgeschaltet von der besagten automatisierten Rohrbiegevorrichtung (2) angeordnet und dazu konfiguriert ist, in die Nähe der besagten ersten Tür (22) der besagten automatisierten Rohrbiegevorrichtung (2) bewegt zu werden, wobei der besagte Roboterarm (4) an seinem beweglichen Ende (41) ein optisches Messsystem (6) aufweist, das dazu konfiguriert ist, während des besagten Biegevorgangs mindestens einen Abschnitt des besagten Längselements (ET), das mindestens teilweise gebogen ist, an der besagten ersten Tür (22) abzutasten und ein digitales Modell (MD2) des besagten mindestens einen abgetasteten Abschnitts zu erzeugen, wobei die besagte elektronische Steuereinheit (3) zu Folgendem konfiguriert ist:
- Ausführen des Positionierens des besagten Roboterarms (4) an der besagten ersten Tür (22) während des besagten Biegevorgangs, das durch die besagte automatisierte Rohrbiegevorrichtung (2) ausgeführt wird, auf der Basis des besagten digitalen Modells (MD1) des besagten gebogenen Längselements (ETP), das erhalten werden soll;
- Erfassen des besagten digitalen Modells (MD2) des besagten mindestens einen abgetasteten Abschnitts, das durch das besagte optische Messsystem (6) erzeugt wird;
- Vergleichen des besagten digitalen Modells (MD2) des besagten mindestens einen abgetasteten Abschnitts mit dem besagten digitalen Modell (MD1) des besagten gebogenen Längselements (ETP), das erhalten werden soll, um die Konformität oder die Nichtkonformität zwischen den besagten Modellen zu überprüfen;
- im Falle einer Nichtkonformität, Ändern der Steuerparameter der besagten automatisierten Rohrbiegevorrichtung (2), um die besagte Nichtkonformität zu korrigieren und/oder ein Alarmsignal für die besagte Nichtkonformität zu erzeugen;
- Steuern der besagten Schneidvorrichtung (7), während des besagten Biegevorgangs durch die besagte automatisierte Rohrbiegevorrichtung (2), auf der Basis des besagten digitalen Modells (MD1) des besagten gebogenen Längselements (ETP), das erhalten werden soll;
**und wobei** die besagte Schneidvorrichtung (7) dem besagten beweglichen Ende (41) des besagten Roboterarms (4) zugeordnet ist.

2. Anlage (1, 100) nach Patentanspruch 1, **dadurch gekennzeichnet, dass** die besagte Schneidvorrichtung (7) einen Laserschneidbrenner (71) umfasst.

3. Anlage (1, 100) nach jeglichem der vorherigen Patentansprüche, **dadurch gekennzeichnet, dass** das besagte Element mit länglicher Entwicklung (ET) ein rohrförmiges Längselement oder ein massives Längselement mit kreisförmigem, elliptischem oder polygonalem Querschnitt ist.

4. Anlage (1, 100) nach jeglichem der vorhergehenden Patentansprüche, **dadurch gekennzeichnet, dass** das besagte optische Messsystem (6) ein dreidimensionales optisches Abtastsystem ist.

5. Anlage (1, 100) nach Patentanspruch 4, **dadurch gekennzeichnet, dass** das besagte dreidimensionale optische Abtastsystem Folgendes umfasst:
- mindestens eine Laserquelle (61, 62), die konfiguriert ist, um einen laminaren Strahl (FL1, FL2) kohärenten Lichts zu erzeugen;
- einen lichtempfindlichen Sensor (63, 64), der konfiguriert ist, um das vom besagten Längselement (ET) reflektierte Licht zu empfangen.

6. Anlage (1, 100) nach Patentanspruch 5, **dadurch gekennzeichnet, dass** das besagte dreidimensionale optische Abtastsystem Folgendes umfasst:
- zwei Laserquellen (61, 62), die konfiguriert sind, um zwei laminare Strahlen (FL1, FL2) kohärenten Lichts zu erzeugen, die unter einem Einfallswinkel zwischen 15° und 45° aufeinander treffen.

7. Anlage (1, 100) nach jeglichem der vorhergehenden Patentansprüche, **dadurch gekennzeichnet, dass** die besagte elektronische Steuereinheit (3) konfiguriert ist, um die besagten Vorgänge des Positionierens des besagten Roboterarms (4), des Erfassens des besagten digitalen Modells (MD2) des besagten mindestens einen abgetasteten Abschnitts, des Vergleichens des besagten digitalen Modells (MD2) des besagten mindestens einen abgetasteten Abschnitts mit dem besagten digitalen Modell (MD1) des besagten gebogenen Längselements (ETP), das erhalten werden soll, und des Änderns der besagten Steuerparameter im Falle einer Nichtkonformität nach jedem Biegevorgang durch die besagte automatisierte Rohrbiegevorrichtung (2) auszuführen.

8. Anlage (100) nach jeglichem der vorhergehenden Patentansprüche, **dadurch gekennzeichnet, dass** sie eine Vielzahl der besagten automatisierten Rohrbiegevorrichtungen (2) umfasst, die nebeneinander angeordnet sind und deren erste Türen (22) entlang einer vordefinierten ersten Bahn (X1) ausgerichtet sind, wobei der besagte Roboterarm (4) konfiguriert ist, um entlang einer zweiten Bahn (X2), die im Wesentlichen parallel zur besagten ersten Bahn (X1) ist, bewegt zu werden, sodass das besagte bewegliche Ende (41) des besagten Roboterarms (4) selektiv an einer der besagten ersten Türen (22) einer der besagten automatisierten Rohrbiegevorrichtungen (2) positioniert werden kann und sodass das besagte optische Messsystem (6) mindestens einen Abschnitt des besagten mindestens teilweise gebogenen Längselements (ET) an der besagten ersten Tür (22) abtasten kann.

9. Anlage (1, 100) nach jeglichem der vorhergehenden Patentansprüche, **dadurch gekennzeichnet, dass** das besagte digitale Modell (MD1) des besagten gebogenen Längselements (ETP), das erhalten werden soll, ein dreidimensionales digitales Modell ist.

10. Anlage (1, 100) nach jeglichem der vorhergehenden Patentansprüche, **dadurch gekennzeichnet, dass** der besagte Roboterarm (4) ein anthropomorpher Roboter (5) ist.

11. Verfahren für die Biegung/Krümmung eines Längselements (ET) mittels einer Anlage (1, 100) nach jeglichem der vorhergehenden Patentansprüche, wobei das besagte Verfahren die folgenden Vorgänge ausführt:
a) Hochladen einer digitalen CAD-Datei, umfassend die Daten in Bezug auf ein digitales Modell (MD1) des besagten gebogenen Längselements (ETP), das erhalten werden soll, in die elektronische Steuereinheit (3) der besagten Anlage (1, 100);
b) Biegen des auf der automatisierten Rohrbiegevorrichtung (2) der besagten Anlage (1, 100) geladenen Längselements (ET);
c) Positionieren des Roboterarms (4) der besagten Anlage (1, 100) in der Nähe der ersten Tür (22) der besagten automatisierten Rohrbiegevorrichtung (2);
d) Abtasten des an der besagten ersten Tür (22) angeordneten gebogenen Abschnitts des besagten Längselements (ET) durch das im beweglichen Ende (41) des besagten Roboterarms (4) vorhandene optische Messsystem (6);
e) Erzeugung eines digitalen Modells (MD2) des besagten mindestens einen abgetasteten Abschnitts;
f) Erfassung des besagten mindestens einen abgetasteten Abschnitts durch die besagte elektronische Steuereinheit (3) des besagten digitalen Modells (MD2);
g) Vergleich des besagten digitalen Modells (MD2) des besagten mindestens einen abgetasteten Abschnitts mit dem besagten digitalen Modell (MD1) des besagten gebogenen Längselements (ETP), das erhalten werden soll, um die Konformität oder die Nichtkonformität zwischen den besagten Modellen zu überprüfen;
h) im Falle einer Nichtkonformität, Änderung der Steuerparameter der besagten automatisierten Rohrbiegevorrichtung (2), um die besagte Nichtkonformität zu korrigieren, und/oder Erzeugung eines Alarmsignals für die besagte Nichtkonformität;
i) Wiederholen der Schritte b) bis h) für jede der am besagten Längselement (ET) vorzunehmenden Biegungen,
und wobei das Verfahren das Ausführen eines Vorgangs g2) umfasst, der vor oder nach dem Vorgang g) ausgeführt wird, wobei der besagte Vorgang g2) das Ausführen von Schnitten und/oder Bohrungen am besagten Längselement (ET) auf der Basis des besagten digitalen Modells (MD1) des besagten gebogenen Längselements (ETP), das erhalten werden soll, umfasst.

## Revendications

1. Installation (1, 100) pour le cintrage/courbure d'éléments à développement sensiblement longitudinal (ET), du type comprenant:
- au moins un dispositif automatisé de cintrage de tubes (2), configuré pour effectuer, grâce à la commande d'une unité de commande électronique (3), le cintrage d'un élément longitudinal (ET), ledit dispositif automatisé de cintrage de tubes (2) étant pourvu d'une première porte de sortie (22) dudit élément longitudinal (ET) au moins partiellement cintré;
- ladite unité de commande électronique (3), configurée pour permettre le chargement d'un fichier numérique CAD comprenant les données relatives à un modèle numérique (MD1) dudit élément longitudinal cintré (ETP) à obtenir, ladite unité de commande électronique (3) étant en outre configurée pour traiter ledit fichier numérique CAD et pour commander ledit dispositif automatisé de cintrage de tubes (2), de manière à cintrer ledit élément longitudinal (ET) sur la base dudit modèle numérique (MD1) dudit élément longitudinal cintré (ETP);
**où** elle comprend, disposés en aval dudit dispositif automatisé de cintrage de tubes (2):
- un appareil de découpe (7) configuré pour découper et/ou percer ledit élément longitudinal (ET);
- au moins un bras robotisé (4) disposé en aval dudit dispositif automatisé de cintrage de tubes (2) et configuré pour être déplacé à proximité de ladite première porte (22) dudit dispositif automatisé de cintrage de tubes (2), ledit bras robotisé (4) présentant à son extrémité mobile (41) un système de mesure optique (6) configuré, pendant ladite opération de cintrage, pour scanner au moins une portion dudit élément longitudinal (ET), au moins partiellement cintré, à hauteur de ladite première porte (22) et pour générer un modèle numérique (MD2) de ladite au moins une portion scannée, ladite unité de commande électronique (3) étant configurée pour:
- effectuer, pendant ladite opération de cintrage par ledit dispositif automatisé de cintrage de tubes (2), le positionnement dudit bras robotisé (4) à hauteur de ladite première porte (22), sur la base dudit modèle numérique (MD1) dudit élément longitudinal cintré (ETP) à obtenir;
- acquérir ledit modèle numérique (MD2) de ladite au moins une partie scannée, généré par ledit système de mesure optique (6);
- comparer ledit modèle numérique (MD2) de ladite au moins une portion scannée avec ledit modèle numérique (MD1) dudit élément longitudinal cintré (ETP) à obtenir, afin de vérifier la conformité ou la non-conformité entre lesdits modèles;
- en cas de non-conformité, modifier les paramètres de contrôle dudit dispositif automatisé de cintrage de tubes (2) de manière à corriger ladite non-conformité et/ou à générer un signal d'alarme relatif à ladite non-conformité;
- contrôler, pendant ladite opération de cintrage par ledit dispositif automatisé de cintrage de tubes (2), ledit appareil de découpe (7), sur la base dudit modèle numérique (MD1) dudit élément longitudinal cintré (ETP) à obtenir;
**et où** ledit appareil de découpe (7) est associé à ladite extrémité mobile (41) dudit bras robotisé (4).

2. Installation (1, 100) selon la revendication 1, **caractérisée en ce que** ledit appareil de découpe (7) comprend une torche de découpe laser (71).

3. Installation (1, 100) selon l'une quelconque des revendications précédentes, **caractérisée en ce que** ledit élément à développement longitudinal (ET) est un élément longitudinal tubulaire ou un élément longitudinal plein à section circulaire, elliptique ou polygonale.

4. Installation (1, 100) selon l'une quelconque des revendications précédentes, **caractérisée en ce que** ledit système de mesure optique (6) est un système optique à scannage tridimensionnel.

5. Installation (1, 100) selon la revendication 4, **caractérisée en ce que** ledit système optique à scannage tridimensionnel comprend:
- au moins une source laser (61, 62) configurée pour générer un faisceau laminaire (FL1, FL2) de lumière cohérente;
- un capteur photosensible (63, 64) configuré pour recevoir la lumière réfléchie par ledit élément longitudinal (ET).

6. Installation (1, 100) selon la revendication 5, **caractérisée en ce que** ledit système optique à scannage tridimensionnel comprend:
- deux sources laser (61, 62) configurées pour générer deux faisceaux laminaires (FL1, FL2) de lumière cohérente qui sont incidents l'un sur l'autre à un angle d'incidence compris entre 15° et 45°.

7. Installation (1, 100) selon l'une quelconque des revendications précédentes, **caractérisée en ce que** ladite unité de commande électronique (3) est configurée pour effectuer lesdites opérations de positionnement dudit bras robotisé (4), d'acquisition dudit modèle numérique (MD2) de ladite au moins une portion scannée, de comparaison dudit modèle numérique (MD2) de ladite au moins une portion scannée avec ledit modèle numérique (MD1) dudit élément longitudinal cintré (ETP) à obtenir, et de modification desdits paramètres de contrôle en cas de non-conformité, après chaque opération de cintrage par ledit dispositif automatisé de cintrage de tubes (2).

8. Installation (100) selon l'une quelconque des revendications précédentes, **caractérisée en ce qu'**elle comprend une pluralité desdits dispositifs automatisés de cintrage de tubes (2), disposés l'un à côté de l'autre et ayant leurs premières portes (22) alignées le long d'une première trajectoire prédéfinie (X1), ledit bras robotisé (4) étant configuré pour être déplacé le long d'une deuxième trajectoire (X2) sensiblement parallèle à ladite première trajectoire (X1), de sorte que ladite extrémité mobile (41) dudit bras robotisé (4) puisse être sélectivement positionnée à hauteur de l'une desdites premières portes (22) de l'un desdits dispositifs automatisés de cintrage de tubes (2), et de sorte que ledit système de mesure optique (6) puisse scanner au moins une partie dudit élément longitudinal (ET) au moins partiellement cintré à hauteur de ladite première porte (22).

9. Installation (1, 100) selon l'une quelconque des revendications précédentes, **caractérisée en ce que** ledit modèle numérique (MD1) dudit élément longitudinal cintré (ETP) à obtenir est un modèle numérique tridimensionnel.

10. Installation (1, 100) selon l'une quelconque des revendications précédentes, **caractérisée en ce que** ledit bras robotisé (4) est un robot anthropomorphe (5).

11. Procédé de cintrage/courbure d'un élément longitudinal (ET) au moyen d'une installation (1, 100) selon l'une quelconque des revendications précédentes, ledit procédé effectuant les opérations suivantes:
a) charger dans l'unité de commande électronique (3) de ladite installation (1, 100) un fichier numérique CAD comprenant les données relatives à un modèle numérique (MD1) dudit élément longitudinal cintré (ETP) à obtenir;
b) effectuer un cintrage de l'élément longitudinal (ET) chargé dans le dispositif automatisé de cintrage de tubes (2) de ladite installation (1, 100);
c) positionner le bras robotisé (4) de ladite installation (1, 100) à proximité de la première porte (22) dudit dispositif automatisé de cintrage de tubes (2);
d) scanner, par le système de mesure optique (6) présent dans l'extrémité mobile (41) dudit bras robotisé (4), de la partie cintrée dudit élément longitudinal (ET) disposé à hauteur de ladite première porte (22);
e) générer un modèle numérique (MD2) de ladite au moins une partie scannée;
f) acquérir, par ladite unité de commande électronique (3) dudit modèle numérique (MD2), ladite au moins une partie scannée;
g) comparer ledit modèle numérique (MD2) de ladite au moins une partie scannée avec ledit modèle numérique (MD1) dudit élément longitudinal cintré (ETP) à obtenir, afin de vérifier la conformité ou la non-conformité entre lesdits modèles;
h) en cas de non-conformité, modifier les paramètres de contrôle dudit dispositif automatisé de cintrage de tubes (2) de manière à corriger ladite non-conformité et/ou génération d'un signal d'alarme relatif à ladite non-conformité;
i) répéter les étapes b) à h) pour chacun des cintrages à effectuer sur ledit élément longitudinal (ET),
et où le procédé comprend l'exécution d'une opération g2) effectuée avant ou après l'opération g), ladite opération g2) permettant d'effectuer des découpes et/ou des perçages sur ledit élément longitudinal (ET), sur la base dudit modèle numérique (MD1) dudit élément longitudinal cintré (ETP) à obtenir.
